# EUROPEAN PATENT SPECIFICATION

(11) **EP 0 307 665 B1**
(45) Date of publication and mention of the grant of the patent: **23.03.1994**
(21) Application number: 88113641.0
(22) Date of filing: 23.08.1988
(51) Int. Cl.: H01B 3/40, C08G 59/42, C08G 59/68, C08G 59/24

(54) **Encapsulation composition and use thereof**
Einbettzusammensetzung und ihre Verwendung
Composition d'encapsulage et son application

(30) Priority: 15.09.1987 US 96690
(43) Date of publication of application: 22.03.1989
(73) Proprietor: International Business Machines Corporation, Armonk, N.Y. 10504 (US)
(72) Inventor: Buchwalter, Stephen Leslie, Wappingers Falls, N.Y. 12 590 (US); Kovac, Caroline Ann, Ridgefield conn. 06 877 (US); Nguyen, Luu Thanh, Peekskill, N.Y. 10 566 (US)
(74) Representative: Schäfer, Wolfgang, Dipl.-Ing.

(56) References cited:
- CA-A- 1 224 595
- DE-A- 3 229 558
- US-A- 4 026 872
- US-A- 4 383 060
- US-A- 4 497 945
- US-A- 4 544 432
- US-A- 4 732 962
- WPIL, FILE SUPPLIER, AN=85-213866/35, 29-09-1979, Derwent Publications, Ltd, London, GB; & JP-A-60 137 046

## Description

The present invention is concerned with compositions that are suitable for encapsulating electronic devices and to the use of such compositions.

Integrated circuit modules or microelectronic devices are typically encapsulated or sealed within a plastic composition. To a large extent, microelectronic components are encapsulated by transfer molding of filled epoxy polymer compositions. The conventional transfer molding epoxy compositions used for encapsulation of microelectronic devices are extremely viscous materials. However, as lead sizes and spacings between leads decrease and the number of leads increases, problems occur in using viscous encapsulating compositions in transfer molding.

Transfer molding is an automated type of compression molding in which a pre-form of the polymeric composition is forced from a chamber into a hot mold cavity. In order to fill up small recesses, pressures up to about 1,723,500 mbar (about 25,000 psi) are commonly employed. These high pressures, along with the high viscosity of the transfer molding compositions, pose serious problems. In particular, under such conditions there is a tendency of the fragile inner leads and/or wire bonds to be distorted or broken during flow of the polymeric composition into the transfer mold under these relatively high external pressures. Moreover, in view of the small spacing that exists between leads in very large scale integration (VLSI) devices, it is extremely difficult to have the viscous polymeric materials to completely wet and adhere to the leads. This, in turn, leads to the potential for moisture and contaminants to enter the integrated circuit module, causing corrosion and failure of the electronic device.

The above problems encountered in transfer molding, to a large extent, could be obviated by employing reaction injection molding (RIM) for the encapsulation. Reaction injection molding is a relatively low pressure one-step injection of liquid components into a closed mold wherein rapid polymerization occurs, thereby resulting in the encapsulated electronic device.

The basis reaction injection molding process involves metering two or more streams of reactants into a small chamber wherein intense turbulent mixing occurs. The mixture is then conveyed to a mold cavity while it undergoes polymerization. The part is subsequently ejected from the mold once gelation has proceeded to the point where safe handling is possible without risking tearing or warpage of the part. If needed, post-curing can be carried out to complete the polymerization.

The total cycle time for a reaction injection molding process is typically about two minutes. The viscosity of the materials fed to a mold in a reaction injection molding process is typcially about 0.05 Pas to about 10 Pas (about 50 cps to about 10,000 cps), and preferably about 1.5 Pas (about 1,500 cps) at injection temperatures that vary from about room temperature to about 200°C. The mold temperatures in a reaction injection molding process are generally in the range of about 100°C to about 200°C with pressures in the mold of about 33,447 mbar to about 10,341 mbar (about 50 psi to about 150 psi).

For a composition to be suitable for reaction injection molding, such must satisfy a number of requirements. For instance, the composition must be of relatively low viscosity while, at the same time, capable of reaction in extremely short periods of time. Also, the compositions should exhibit relatively low toxicity characteristics. Further problems exist when the reaction injection molding composition is to be employed as an encapsulant for electronic devices. In particular, such compositions must be free from contaminants, such as chloride ions, that would tend to contribute to corrosion of the electronic devices. The task of achieving such compositions is made that much more difficult when it is desired to obtain a composition that is reasonable from a cost standpoint and, therefore, could be employed on a commercial competitive basis.

It is an object of the present invention to provide a curable composition being not toxic and free of contaminants, like chloride ions, and the application of which is economical from a cost standpoint.

It is another object of the present invention to provide a curable composition suitable for use in reaction injection molding.

It is a further object of the present invention to provide a curable composition suitable for encapsulating electronic devices.

It is still a further object of the invention to provide an electronic device encapsulated in a cured composition.

It is also an object of the present invention to provide a process for encapsulating electronic devices.

These objects are achieved by a composition as disclosed in claim 1, by an electronic device as disclosed in claim 8 and by a process as claimed in claim 9.

The compositions of the present invention exhibit relatively low viscosity and yet are extremely fast reacting. Moreover, the compositions of the present invention avoid contamination due to halide such as chloride ions. In addition, the compositions of the present invention are relatively reasonable with respect to cost.

Advantageous embodiments of the inventive composition and the inventive process are disclosed in the subclaims.

The invention will become more apparent from the following detailed description.

The polymeric materials employed in accordance with the present invention are cycloaliphatic epoxides. Cycloaliphatic epoxides are known and are obtained by oxidation of cyclic olefins. Cycloaliphatic epoxy materials are generally relatively slow reacting particularly as compared to the more conventional glycidyl ether type of epoxides. Examples of suitable cycloaliphatic epoxides are suggested in U.S. Patents 3,027,357; 2,890,194; 2,890,197; and 4,294,746, disclosures of which are incorporated herein by reference. Some specific examples of suitable cycloaliphatic epoxides are: 3,4-epoxycyclohexylmethyl-3,4-epoxycyclohexane carboxylate, available from Union Carbide under the trade designation ERL-4221; bis (3,4-epoxy-6-methylcyclohexylmethyl) adipate; bis (3,4-epoxycyclohexylmethyl) adipate; bis (2,3-epoxycyclopentyl) ether; vinyl cyclohexane diepoxide, available from Union Carbide under the trade designation ERL-4206; 2-(3,4-epoxycyclohexyl)-5,5-spiro(2,3-epoxycyclohexane)-m-dioxane; 2-(3,4-epoxycyclohexyl-5,5-spiro-3,4-epoxy) cyclohexane-m-dioxane, available from Union Carbide under the trade designation ERL-4234; and bis(3,4-epoxycyclohexyl) adipate, available from Union Carbide under the trade designation ERL-4299.

A discussion of various cycloaliphatic epoxides can be found in the publication entitled "Cycloaliphatic Epoxide Systems", Union Carbide, 1970, disclosure of which is incorporated herein by reference.

Mixtures of cycloaliphatic epoxides can be employed when desired. The preferred cycloaliphatic epoxide employed pursuant to the present invention is 3,4-epoxycyclohexylmethyl 3,4-epoxycyclohexanecarboxylate (systematic name: 7-oxabicyclo[4.1.0]heptane-3-carboxylic acid 7-oxabicyclo[4.1.0]hept-3-ylmethyl ester).

The compositions of the present invention include an anhydride of an organic carboxylic acid as a hardening agent. The hardening agent is preferably in liquid form. If a solid anhydride hardening agent is employed, such should be melted when added to the composition. Examples of anhydrides are methyltetrahydrophthalic anhydride; hexahydrophthalic anhydride; maleic anhydride, trimellitic anhydride; pyromellitic dianhydride, tetrahydrophthalic anhydride; phthalic anhydride; norbornenedicarboxylic anhydride; nadic methyl anhydride; and methylcyclohexane-1,2-dicarboxylic anhydride.

Additional anhydrides can be found, for instance, in H. Lee and K. Neville, Handbook of Epoxy Resin, McGraw Hill, 1967, Chapter 12, disclosure of which is incorporated herein by reference.

The anhydride curing agent is generally employed in amounts constituting on an equivalent basis, about 20% to about 120% of the cycloaliphatic epoxide employed and preferably about 75% to about 100% of the epoxide equivalents.

In addition to the cycloaliphatic epoxide and hardener, a reactive modifier can also be used. The purpose of the reactive modifier is to impart desirable mechanical properties to the cured composition such as flexibility and thermal shock resistance. Examples of modifiers which can be used are fatty acids, fatty acid anhydrides such as polyazelaic polyanhydride and dodecenylsuccinic anhydride, long chain alcohols, polyetherdiols such as polyethylene glycol and polypropylene glycol, and other materials having hydroxyl, carboxyl, epoxy, and/or carboxylic anhydride functionality.

In order to provide a composition having reaction times fast enough to be compatible in a reaction injection molding process, it is necessary to employ as reaction or hardener promoter an alkylene oxide substituted adduct of an imidazole. The alkylene oxide employed can be ethylene oxide, propylene oxide, or butylene oxide and is preferably propylene oxide. The imidazole employed is preferably imidazole. However, if desired, substituted imidazoles can be used, including alkyl substituted such as C₁-C₁₂ alkyl groups. When a substituted imidazole is employed as the imidazole it is usually substituted at the carbon atoms of the imidazole ring and more usually at positions 4 and/or 5 thereof. Mixtures of imidazoles as well as mixtures of alkylene oxides can be used. The adduct is usually obtained from about 0.5 to about 10 alkylene oxide units per imidazole. The propylene oxide adduct of imidazole is available from Dixie Chemical Company under the trade designation AP-5. The hydroxyl number (as determined by the method in ASTM volume 08.02, p 608, method D2849.30.1.3 (1984) is about 406.5 mg KOH/g sample or about 138.0 g/eq. AP-5 is a viscous liquid having the empirical formula of C₆H₁₀N₂O (MW 126) according to the manufacturer and contains about one propylene oxide per imidazole.

The alkylene oxide adduct of imidazole is employed in amounts of about 0.1% to about 10% by weight and preferably about 1% to about 5% by weight based upon the total weight of the cycloaliphatic epoxide, anhydride hardening agent, and alkylene oxide adduct of imidazole. The alkylene oxide adduct of imidazole promotes the hardening of the cycloaliphatic epoxide and also enters into reaction and, thereby, is not free to migrate and does not promote corrosion in the cured encapsulated product.

The compositions of the present invention can also include fillers such as silicon dioxide (SiO₂), aluminum oxide (Al₂O₃), tantalum pentoxide (Ta₂O₅), silicon carbide (SiC), boron carbide (B₄C), tungsten carbide (WC), silicon nitride (Si₃N₄), and lithium aluminum silicate compounds. Selection of the proper filler, filler mixture ratios, and filler loading is based on the potential of the fillers to lower the coefficient of thermal expansion (CTE) of the resulting composite and can be determined by persons skilled once aware of the present disclosure without undue experimentation. The unfilled cycloaliphatic epoxy has a CTE (coefficient of thermal expansion) of 95 ppm/°C. As the filler concentration is raised, a linear decrease in CTE following the linear rule of mixtures is obtained. This is observed for all the fillers listed with Al₂O₃ exhibiting the largest reduction in CTE (45%) and tantalum pentoxide with the least improvement (20%) at a filler loading of 95% by weight. In these examples, the fillers were not treated with any interfacial adhesion promoters.

If fillers are employed in the composition, such are usually present in amounts of about 10% to 98% by weight, and preferably about 90% to 95% by weight.

The compositions of the present invention exhibit a viscosity of about 0.05 Pas to about 5 Pas (about 50 centipoise to about 5,000 centipoise) at about 25°C and more usually about 0.1 Pas to about 1 Pas (about 100 centipoise to about 1,000 centipoise) at about 25°C, typical of which is 0.7 Pas (about 700 centipoise) at about 25°C.

The compositions are generally prepared by rapidly admixing immediately prior to introduction in the mold, the epoxy employed with a mixture of the anhydride and the promoter under pressure conditions of about 34,470 mbar to about 206,820 mbar (about 500 psi to about 3,000 psi) and typcially about 68,940 mbar (about 1,000 psi). In the event fillers are employed, the pressure is usually about 103,410 mbar to about 137,880 mbar (about 1,500 psi to about 2,000 psi). If a filler and/or flexibilizer is employed, such can be provided with either the epoxy or the mixture of anhydride and promoter or partially with both.

The composition is then introduced into the mold for the encapsulation. The pressure in the mold is about 1,723.5 mbar to about 3,447 mbar (25 psi to about 50 psi) which is advantageous since the electronic part being encapsulated will not be exposed to the type of high pressure employed in transfer molding operations. The temperature of the mold is usually about 100°C to about 200°C and more usually about 130°C to about 160°C. The time in the mold is from about 30 seconds to about 10 minutes and more preferably about 1 minute to about 5 minutes, shorter times being employed for use at higher temperatures. The encapsulated article is removed from the mold when it is in a tack-free state. It can then be subjected to a post-cure such as heating at about 150°C to about 200°C, typical of which is about 185°C for about 1 hour to about 3 hours, preferably about 2 hours.

Example of typical microelectronic devices that can employ the composition of the present invention can be found in Surface Mount Technology, G. Caswell, Chapter 1, International Society for Hybrid Microelectronics, 1984, disclosure of which is incorporated herein by reference.

The following non-limiting examples are presented to further illustrate the present invention.

### EXAMPLE 1

A composition containing about 6.0 parts by weight of 3,4-epoxycyclohexylmethyl-3,4-epoxycyclohexanecarboxylate (Union Carbide ERL-4221) and about 4.0 parts by weight of a Union Carbide ERL-4350 (a proprietary cycloaliphatic flexibilizing epoxy of Union Carbide); about 8.0 parts by weight of methylcyclohexane-1,2-dicarboxylic anhydride (about 89% of the epoxide equivalent of the cycloaliphatic epoxide) and about 0.4 parts by weight of propylene oxide adduct of imidazole (Dixie Chemical Company - AP-5).

The composition is subjected to a temperature of about 150°C and exhibits a gel time thereat of less than 2 minutes. The gel time is the amount of time to provide a tack-free composition that can be removed from the mold.

### EXAMPLE 2

A composition containing about 5.2 parts by weight of 3,4-epoxycyclohexylmethyl 3,4-cyclohexylcarboxylate, about 10.7 parts by weight of a polypropylene glycol (Union Carbide Niax LHT-34), about 5.4 parts by weight of methylcyclohexane-1,2-dicarboxylic anhydride, and about 0.25 parts by weight of propylene glycol adduct of imidazole (Dixie Chemical Company AP-5). The composition is subjected to a temperature of 100°C and exhibits a gel time of about 21 minutes.

### EXAMPLE 3

A composition containing about 7.0 parts by weight of ERL-4221, about 3.0 parts by weight of ERL-4350, about 8.7 parts by weight of methylcyclohexane-1,2-dicarboxylic anhydride, and about 0.19 parts by weight of AP-5. The composition is subjected to a temperature of 100°C and exhibits a gel time of about 23 minutes.

### EXAMPLE 4

Example 3 is repeated, except that about 0.37 parts by weight of AP-5 are used. The gel time at 100°C is about 15 minutes.

### EXAMPLE 5

Example 3 is repeated, except that about 0.56 parts by weight of AP-5 is used. The gel time at 100°C is about 8 minutes.

### COMPARISON EXAMPLE A

ERL-4221 (about 10 parts by weight), NIAX LHT-34 (about 20 parts by weight), and methylcyclohexane-1,2-dicarboxylic anhydride (about 10 parts by weight) were mixed with various levels of pyridine and subjected to 100°C. The respective gel times are shown below.

| Promoter | Parts by Weight | Gel Time (min) at 100°C |
|---|---|---|
| None | -- | >221 |
| Pyridine | 0.12 | 60 |
| Pyridine | 0.24 | 57 |
| Pyridine | 0.50 | 56 |

### COMPARISON EXAMPLE B

ERL-4221 (about 10.0 parts by weight), NIAX LHT-34 (about 15.5 parts by weight), and methylcyclohexane-1,2-dicarboxylic anhydride (about 10.4 parts by weight) were mixed with various promoters and subjected to 100°C. The respective gel times are reported below.

| Promoter | Parts by Weight | Gel Time (min) at 100°C |
|---|---|---|
| Pyridine | 0.12 | 52 |
| 2,3-Diazabicyclooctane | 0.12 | 45 |
| 2-Ethyl-4-Methylimidazole | 0.24 | >60 |
| Benzyldimethylamine | 0.24 | >72 |
| Morpholine | 1.2 | >126 |

### COMPARISON EXAMPLE C

ERL-4221 (about 7.0 parts by weight), ERL-4350 (about 3.0 parts by weight), and methylcyclohexane-1,2-dicarboxylic anhydride (about 8.7 parts by weight) were mixed with various promoters and subjected to 100°C. The respective gel times are reported below.

| Promoter | Parts by Weight | Gel Time (min) at 100°C |
|---|---|---|
| Pyridine | 0.19 | 20 |
| 2-Ethyl-4-Methylimidazole | 0.19 | >78 |
| Benzyldimethylamine | 0.19 | 57 |

The 100°C used in Examples 2-5 and Comparison Examples A-C provides for a very convenient screening or testing temperature with the actual temperature more usually employed in the RIM process being about 150°C. Those compositions exhibiting gel times of about 25 minutes or less at 100°C normally exhibit gel times of less than 2 minutes at 140°C to 160°C. As apparent from a comparison of Comparison Examples A-C with Examples 1-5, the use of the alkylene oxide of the imidazole provides for significantly improved reaction times as compared to the various promoters tested, except for certain of the examples with pyridine. However, pyridine is not especially suitable since it is a monomeric material that remains as such in the cured polymer as a potentially troublesome free amine.

## Claims

1. A composition for encapsulating electronic devices comprising:
a) cycloaliphatic epoxide,
b) an anhydride of carboxylic acid in an amount sufficient to harden said cycloaliphatic epoxide;
c) an alkylene oxide adduct of an imidazole in an amount of 0.1 % to 5 % by weight of the total weight of said epoxide, anhydride, and adduct, and
d) optionally a filler and/or a reactive modifier to impart desirable mechanical properties to the cured composition.

2. Composition according to claim 1 wherein said cycloaliphatic epoxide is selected from the group of 3,4-epoxycyclohexylmethyl 3,4-epoxycyclohexane carboxylate;
bis(3,4-epoxy-6-methyl-cyclohexylmethyl) adipate; bis(3,4-epoxycyclohexylmethlyl) adipate;
bis(2,3-epoxycyclopentyl) ether, vinyl cyclohexane diepoxide; 2-(3,4-epoxycyclohexyl)-5,5-spiro(2,3-epoxycyclohexane)-m-dioxane;
2-(3,4-epoxycyclohexyl-5,5-spiro-3,4-epoxy) cyclohexane-m-dioxane; bis(3,4-epoxycyclohexyl) adipate; and mixtures thereof with 3,4-epoxycyclohexylmethyl 3,4-epoxycyclohexane carboxylate being most preferred.

3. Composition according to claim 1 or 2 wherein said anhydride is liquid at normal room temperature.

4. Composition according to any one of claims 1 to 3 wherein said anhydride is selected from the group of methyltetrahydrophthalic anhydride; hexahydrophthalic anhydride; tetrahydrophthalic anhydride; phthalic anhydride; norbornene dicarboxylic anhydride; nadic methyl anhydride; methylcyclohexane-1,2-dicarboxylic anhydride; and mixtures thereof with methylcyclohexane-1,2-dicarboxylic anhydride being most preferred.

5. Composition according to any one of claims 1 to 4 wherein the amount of said anhydride is about 20% to about 120% and preferably about 75% to about 100% by equivalents of the epoxide equivalent of the cycloaliphatic epoxide.

6. Composition according to any one of claims 1 to 5 wherein said alkylene oxide is propylene oxide and said imidazole is imidazole.

7. Composition according to any one of claims 1 to 6 having a viscosity of about 0.1 Pas to about 1 Pas (about 100 centipoise to about 1,000 centipoise) at about 25°C.

8. An electronic device encapsulated in a cured composition obtained from a formulation comprising:
a) cycloaliphatic epoxide;
b) an anhydride of carboxylic acid in an amount sufficient to harden said cycloaliphatic epoxide; and
c) an alkylene oxide adduct of an imidazole in an amount as in claim 1.

9. A process for encapsulating an electronic device by reaction injection molding which comprises providing an electronic device in a mold; providing an encapsulating composition comprising:
a) cycloaliphatic epoxide;
b) an anhydride of carboxylic acid in an amount sufficient to harden said cycloaliphatic epoxide;
c) an alkylene oxide adduct of an imidazole in an amount as in claim 1,
introducing said encapsulating composition into said mold; and permitting said encapsulating composition to harden and thereby obtain an encapsulated electronic device; and optionally subjecting said encapsulating composition to post-curing after removal from said mold.

10. Process according to claim 9 wherein the pressure in said mold is about 1,723.5 mbar to about 3,447 mbar (about 25 psi to about 50 psi).

11. Process according to claim 9 or 10 wherein the temperature in said mold is about 100°C to about 200°C and preferably about 130°C to about 160°C.

12. Process according to any one of claims 9 to 11 wherein the time in said mold is about 1 minute to about 10 minutes and preferably about 1 minute to about 5 minutes.

## Patentansprüche

1. Zusammensetzung zur Einbettung elektronischer Bausteine, die folgendes enthält:
a) cycloaliphatisches Epoxid,
b) ein Carbonsäureanhydrid in einer Menge, die zur Härtung des cycloaliphatischen Epoxids ausreicht;
c) ein Alkenoxid-Addukt eines Imidazols in einer Menge zwischen 0,1 Gew.-% und 5 Gew.-% des Gesamtgewichts von Epoxid, Anhydrid und Addukt, und
d) einen optionalen Füllstoff und/oder einen reaktiven Modifizierer, um erwünschte mechanische Eigenschaften auf die ausgehärtete Zusammensetzung zu übertragen.

2. Zusammensetzung gemäß Anspruch 1, wobei das cycloaliphatische Epoxid aus der Gruppe aus 3,4-Epoxycyclohexylmethyl-3,4-epoxycyclohexancarboxylat, Bis-(3,4-Epoxy-6-Methyl-Cyclohexylmethyl)adipat, Bis-(3,4-Epoxycyclohexylmethyl)adipat, Bis-(2,3-Epoxycyclopentyl)ether, Diepoxyvinylcyclohexan, 2-(3,4-Epoxycyclohexyl)-5,5-Spiro-(2,3-Epoxycyclohexan)-m-Dioxan, 2-(3,4-Epoxycyclohexyl-5,5-Spiro-3,4-Epoxy)cyclohexan-m-Dioxan, Bis-(3,4-Epoxycyclohexyl)adipat und deren Mischungen ausgewählt wird, wobei 3,4-Epoxycyclohexylmethyl-3,4-Epoxycyclohexancarboxylat am meisten bevorzugt wird.

3. Zusammensetzung gemäß Anspruch 1 oder 2, wobei das Anhydrid bei normaler Zimmertemperatur flüssig ist.

4. Zusammensetzung gemäß einem der Ansprüche 1 bis 3, wobei das Anhydrid aus der Gruppe aus Methyltetrahydrophthalsäureanhydrid, Hexahydrophthalsäureanhydrid, Tetrahydrophthalsäureanhydrid, Phthalsäureanhydrid, Norbornen-dicarbonsäureanhydrid, Nadic-methylanhydrid, Methylcyclohexan-1,2-dicarbonsäureanhydrid und deren Mischungen ausgewählt wird, wobei Methylcyclohexan-1,2-dicarbonsäureanhydrid am meisten bevorzugt wird.

5. Zusammensetzung gemäß einem der Ansprüche 1 bis 4, wobei die Menge des Anhydrids zwischen etwa 20 Äq.-% und etwa 120 Äq.-% und vorzugsweise zwischen etwa 75 Äq.-% und etwa 100 Äq.-% des Epoxidäquivalents des cycloaliphatischen Epoxids liegt.

6. Zusammensetzung gemäß einem der Ansprüche 1 bis 5, wobei das Alkenoxid Propenoxid und das Imidazol Imidazol ist.

7. Zusammensetzung gemäß einem der Ansprüche 1 bis 6, die bei etwa 25°C eine Viskosität zwischen etwa 0,1 Pas bis etwa 1 Pas (etwa 100 Centipoise bis etwa 1.000 Centipoise) besitzt.

8. Elektronischer Baustein, der in einer ausgehärteten Zusammensetzung eingebettet ist, die aus einem Ansatz erhalten wird, der folgendes enthält:
a) cycloaliphatisches Epoxid,
b) ein Carbonsäureanhydrid in einer Menge, die zur Härtung des cycloaliphatischen Epoxids ausreicht;
c) ein Alkenoxid-Addukt eines Imidazols in einer Menge zwischen 0,1 Gew.-% und 5 Gew.-% des Gesamtgewichts von Epoxid, Anhydrid und Addukt.

9. Verfahren zur Einbettung eines elektronischen Bausteins durch Reaktionsspritzguß, das folgendes umfaßt: Vorsehen eines elektronischen Bausteins in einer Form; Vorsehen einer Einbettzusammensetzung, die folgendes umfaßt:
a) cycloaliphatisches Epoxid,
b) ein Carbonsäureanhydrid in einer Menge, die zur Härtung des cycloaliphatischen Epoxids ausreicht;
c) ein Alkenoxid-Addukt eines Imidazols in einer Menge wie in Anspruch 1;
Einbringen der Einbettzusammensetzung in die Form; und Gewähren, daß die Einbettzusammensetzung aushärtet, wodurch ein eingebetteter elektronischer Baustein erhalten wird; und optionale Nachhärtung der Einbettzusammensetzung nach der Entnahme aus der Form.

10. Verfahren gemäß Anspruch 9, wobei der Druck in der Form zwischen etwa 1.723,5 mbar und etwa 3.447 mbar (etwa 25 psi bis etwa 50 psi) liegt.

11. Verfahren gemäß Anspruch 9 oder 10, wobei die Temperatur in der Form zwischen etwa 100°C und etwa 200°C und vorzugsweise zwischen etwa 130°C und etwa 160°C liegt.

12. Verfahren gemäß einem der Ansprüche 9 bis 11, wobei die Verweilzeit in der Form zwischen etwa 1 Minute und etwa 10 Minuten und vorzugsweise zwischen etwa 1 Minute und etwa 5 Minuten liegt.

## Revendications

1. Composition pour encapsuler des dispositifs électroniques comprenant :
a) de l'époxyde cycloaliphatique
b) un anhydride d'acide carboxylique dans une quantité suffisante pour durcir ledit époxyde cycloaliphatique;
c) une addition d'oxyde alkylène d'un imidazole dans une quantité de 0,1% à 5% en poids du poids total dudit époxyde, anhydride et addition, et
d) de façon optionnelle, une matière de remplissage et/ou un composant réactif pour donner des propriétés mécaniques voulues à la composition polymérisée.

2. Composition selon la revendication 1 dans laquelle ledit époxyde cycloaliphatique est choisi dans le groupe de: carboxylate de 3, 4 époxycyclohexylméthyl 3, 4 époxycyclohexane; adipate de (3, 4- époxy - 6- méthyl- cyclo hexylméthyl); adipate de (3, 4- époxycyclohexylméthyl); (2, 3-époxycyclopentyl) éther, diépoxyde de vinyl cyclohexane; 2-(3,4-époxycyclohexyl)- 5,5-spiro- (2,3-époxycyclohexane)-m-dioxane; 2-(3,4-époxycyclohexyl-5,5-spiro-3,4-époxy) cyclohexane-m-dioxane; adipate de bis-3,4-époxycyclohexyle; et leurs mélanges, le carboxylate de 3,4- époxycyclohexylméthyl 3,4 - époxycyclohexane étant préféré.

3. Composition selon la revendication 1 ou 2 dans laquelle ledit anhydride est liquide à la température ambiante.

4. Composition selon l'une des revendications 1 à 3 dans laquelle ledit anhydride est selectionné dans le groupe de: anhydride méthyltétrahydrophthalique; anhydride hexahydrophthalique; anhydride tetrahydrophthalique; anhydride phthalique; anhydride norbornène dicarboxylique; anhydride méthyl nadique; anhydride méthylcyclohexane-1, 2-dicarboxylique, et leurs mélanges; l'anhydride méthylcyclohexane-1, 2- dicarboxylique étant préféré.

5. Composition selon l'une quelconque des revendications 1 à 4 dans laquelle la quantité dudit anhydride est entre environ 20% à environ 120% et de préférence d'environ 75% à environ 100% en équivalent époxyde de l'époxyde cycloaliphatique.

6. Composition selon l'une quelconque des revendications 1 à 5 dans laquelle ledit oxyde alkylène est de l'oxyde de propylène et ledit imidazole est de l'imidazole.

7. Composition selon l'une quelconque des revendications 1 à 6 ayant une viscosité d'environ 0,1 Pas à environ 1 Pas (environ 100 centipoises à environ 1000 centipoises) à environ 25°C.

8. Dispositif électronique encapsulé dans une composition cuite obtenue à partir d'une formulation comprenant:
a) de l'époxyde cycloaliphatique,
b) un anhydride d'acide carboxylique d'une quantité suffisante pour durcir ledit époxyde cycloaliphatique, et
c) un additif d'oxyde alkylène d'un imidazole dans une quantité telle que définie dans la revendication 1

9. Procédé pour encapsuler un dispositif électronique par moulage à injection de réaction qui comprend les étapes de:
- fournir un dispositif électronique dans un moule, fournir une composition d'encapsulage comprenant:
a) de l'époxyde cycloaliphatique
b) un anhydride d'un acide carboxylique dans une quantité suffisante pour durcir ledit époxyde cycloaliphatique
c) un additif d'oxyde alkylène d'un imidazole dans une quantité telle que définie dans la revendication 1,
- introduire ladite composition encapsulée dans ledit moule; et permettre à ladite composition encapsulée de durcir et obtenir ainsi un dispositif électronique encapsulé; et de façon optionnelle, soumettre ladite composition encapsulée à une post-cuisson après retrait dudit moule.

10. Procédé selon la revendication 9 dans lequel la pression dans ledit moule est d'environ 1.723,5 mbars à environ 3.447 mbars (environ 25 psi à environ 50 psi)

11. Procédé selon la revendication 9 ou 10 dans lequel la température dans ledit moule est d'environ 100°C à environ 200°C et de préférence environ 130°C à environ 160°C.

12. Procédé selon l'une quelconque des revendications 9 à 11 dans lequel le temps dans ledit moule est environ 1 minute à environ 10 minutes et de préférence environ 1 minute à environ 5 minutes.
